# EUROPEAN PATENT APPLICATION

(11) **EP 4 716 087 A1**
(43) Date of publication of application: **25.03.2026**
(21) Application number: 23938365.6
(22) Date of filing: 19.05.2023
(51) Int. Cl.: H02M 7/49, H02M 7/48

(54) **POWER CONVERSION DEVICE**

(71) Applicant: Mitsubishi Electric Corporation, Tokyo 100-8310 (JP)
(72) Inventor: YAMANAKA, Daisuke, Tokyo 100-8310 (JP); KONO, Yoshiyuki, Tokyo 100-8310 (JP)
(74) Representative: Witte, Weller & Partner Patentanwälte mbB
(86) International application number: PCT/JP2023/018805
(87) International publication number: WO 2024/241391

(57) **Abstract**

A power conversion device (1) includes: a power converter (2) including a plurality of converter cells (7) connected in series; and a control device (3). Each of the plurality of converter cells (7) includes: a cell controller (35); a first semiconductor circuit (25A) including a first switching element (22) and a first diode (23A); a second semiconductor circuit (25B) including a second switching element (22B) and a second diode (23A); a power storage element (24) connected in parallel with a series body including the first semiconductor circuit (25A) and the second semiconductor circuit (25B) connected in series; and a thyristor (26) connected in parallel with the first semiconductor circuit (25A). When the cell controller (35) detects an overcurrent flowing to the first semiconductor circuit (25A), the cell controller (35) gate-blocks the first switching element (22A) and the second switching element (22B), and controls the thyristor (26) to be in an ON state.

## Description

### TECHNICAL FIELD

The present disclosure relates to a power conversion device.

### BACKGROUND ART

In recent years, a modular multilevel converter (MMC) has been known as a high-voltage and large-capacity power conversion device applied to a high-voltage system such as a power system. The MMC is constituted by arms including cascade-connected converter cells. Each converter cell includes a plurality of semiconductor switches and a capacitor, and outputs a voltage across the capacitor or a zero voltage by turning on/off the semiconductor switches.

For an MMC including half-bridge type converter cells, there is known a method of providing a thyristor within each converter cell in order to prevent a reverse freewheeling diode (FWD) from being broken by a short-circuit current flowing thereinto from an alternating current (AC) side when a direct current (DC) line is short-circuited.

For example, Japanese Patent No. 5318774 (PTL 1) discloses a configuration in which a thyristor is connected in parallel with a reverse freewheel diode in order to protect the reverse freewheel diode from a short-circuit current when a short circuit occurs between DC voltage terminals.

### CITATION LIST

### PATENT LITERATURE

PTL 1: Japanese Patent No. 5318774

### SUMMARY OF INVENTION

### TECHNICAL PROBLEM

In PTL 1, a short circuit in a DC voltage circuit is detected by a voltage sensor or a current sensor of the DC voltage circuit and an AC terminal. Then, an evaluation unit coupled to such a sensor checks a short-circuit fault based on implemented logic, and generates a signal for triggering the thyristor. On the other hand, the FWD, which is an element within a converter cell, needs to be protected so as not to be broken by an overcurrent generated in the event of a fault other than a short-circuit fault in the DC voltage circuit (for example, an arm short-circuit fault, a ground fault, or the like). However, PTL 1 does not teach or suggest any solution to achieve such protection.

An object in an aspect of the present disclosure is to provide a power conversion device capable of more appropriately protecting an element within a converter cell by detecting an overcurrent within the converter cell.

### SOLUTION TO PROBLEM

According to an embodiment, there is provided a power conversion device to perform power conversion between an AC circuit and a DC circuit. The power conversion device includes: a power converter including a plurality of converter cells connected in series; and a control device to control the power converter. Each of the plurality of converter cells includes: a cell controller; a first semiconductor circuit including a first switching element and a first diode connected in anti-parallel with the first switching element; a second semiconductor circuit including a second switching element and a second diode connected in anti-parallel with the second switching element; a power storage element connected in parallel with a series body including the first semiconductor circuit and the second semiconductor circuit connected in series; and a thyristor connected in parallel with the first semiconductor circuit. When the cell controller detects an overcurrent flowing to the first semiconductor circuit, the cell controller gate-blocks the first switching element and the second switching element, and controls the thyristor to be in an ON state.

According to another embodiment, there is provided a power conversion device to perform power conversion between an AC circuit and a DC circuit. The power conversion device includes: a power converter including a plurality of converter cells connected in series; and a control device to control the power converter. Each of the plurality of converter cells includes: a cell controller; and a first switching circuit and a second switching circuit. Each of the first switching circuit and the second switching circuit has: a first semiconductor circuit including a first switching element and a first diode connected in anti-parallel with the first switching element; a second semiconductor circuit including a second switching element and a second diode connected in anti-parallel with the second switching element; and a power storage element connected in parallel with a series body including the first semiconductor circuit and the second semiconductor circuit connected in series. A positive electrode of the power storage element is connected with a positive electrode of the second semiconductor circuit, and a negative electrode of the power storage element is connected with a negative electrode of the first semiconductor circuit. Each of the plurality of converter cells further includes: a third switching element provided between the positive electrode of the power storage element in the first switching circuit and the negative electrode of the power storage element in the second switching circuit; and a thyristor connected between a positive electrode of the first semiconductor circuit in the first switching circuit and a positive electrode of the first semiconductor circuit in the second switching circuit. When the cell controller detects an overcurrent flowing to the third switching element, the cell controller gate-blocks the first switching element, the second switching element, and the third switching element, and controls the thyristor to be in an ON state.

### ADVANTAGEOUS EFFECTS OF INVENTION

With the power conversion device according to the present disclosure, an element within a converter cell can be protected more appropriately.

### BRIEF DESCRIPTION OF DRAWINGS

Fig. 1 is a schematic configuration diagram of a power conversion device according to the present embodiment.
Fig. 2 is a diagram showing a configuration of a converter cell according to the present embodiment.
Fig. 3 is a block diagram showing an example of a hardware configuration of a control device according to the present embodiment.
Fig. 4 is a schematic configuration diagram showing a first modification of the power conversion device according to the present embodiment.
Fig. 5 is a diagram showing a modification of a switching circuit according to the present embodiment.
Fig. 6 is a schematic configuration diagram showing a second modification of the power conversion device according to the present embodiment.
Fig. 7 is a diagram showing a modification of the converter cell according to the present embodiment.

### DESCRIPTION OF EMBODIMENTS

Hereinafter, the present embodiment will be described with reference to the drawings. In the description below, identical parts will be designated by the same reference numerals. Since their names and functions are also the same, detailed description thereof will not be repeated.

### <Configuration of Power Conversion Device>

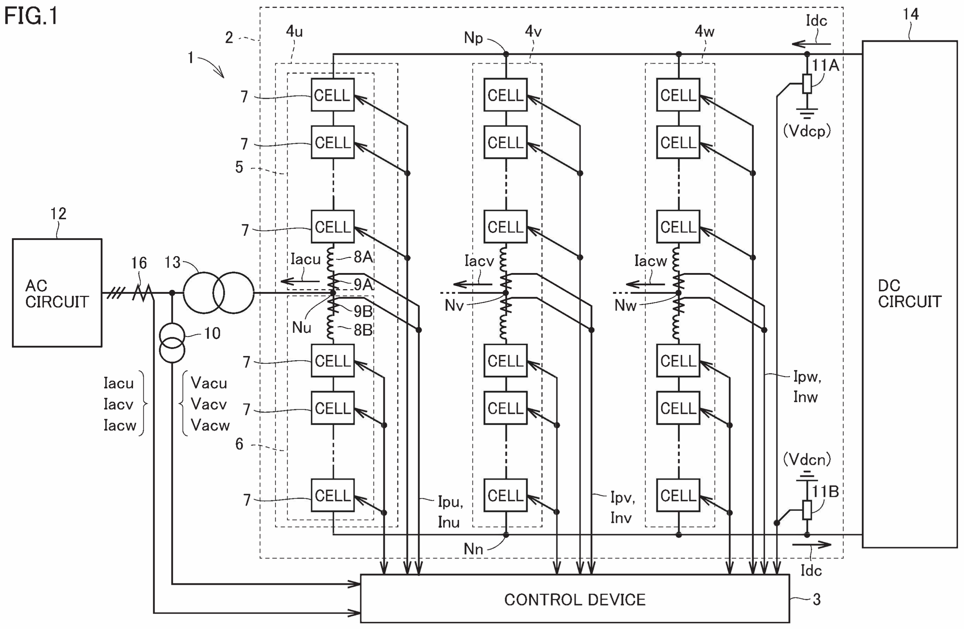

Fig. 1 is a schematic configuration diagram of a power conversion device according to the present embodiment. Referring to Fig. 1, a power conversion device 1 includes a power converter 2 including a plurality of converter cells (corresponding to "cells" in Fig. 1) 7 connected in series with each other, and a control device 3 to control power converter 2. A "converter cell" is also referred to as a "sub module" or a "unit converter". Power conversion device 1 performs power conversion between a DC circuit 14 and an AC circuit 12.

Power converter 2 includes a plurality of leg circuits 4u, 4v, and 4w (hereinafter described as a "leg circuit 4" when they are collectively referred to or any one of them is referred to) connected in parallel with each other between a positive electrode DC terminal (that is, a high potential-side DC terminal) Np and a negative electrode DC terminal (that is, a low potential-side DC terminal) Nn.

Leg circuit 4 is provided for each of a plurality of phases constituting an alternating current. Leg circuit 4 is connected between AC circuit 12 and DC circuit 14, and performs power conversion between both circuits. Fig. 1 shows a case where AC circuit 12 is a three-phase AC system, and three leg circuits 4u, 4v, and 4w are provided corresponding to a U phase, a V phase, and a W phase, respectively.

AC input terminals Nu, Nv, and Nw provided to leg circuits 4u, 4v, and 4w, respectively, are connected to AC circuit 12 via an interconnection transformer 13. AC circuit 12 is, for example, an AC power system including an AC power source and the like. In Fig. 1, for ease of illustration, connection between AC input terminal Nv, Nw and interconnection transformer 13 is not shown.

High potential-side DC terminal Np and low potential-side DC terminal Nn connected in common to leg circuits 4 are connected to DC circuit 14. DC circuit 14 is, for example, a DC terminal of a DC power system including a DC power transmission grid and the like, or of another power conversion device. In the latter case, two power conversion devices are coupled to constitute a Back To Back (BTB) system for connecting AC power systems having different rated frequencies, synchronizations, or the like.

The leg circuits may be configured to be connected to AC circuit 12 via an interconnection reactor, instead of using interconnection transformer 13 in Fig. 1. Furthermore, leg circuits 4u, 4v, and 4w may be respectively provided with primary windings instead of AC input terminals Nu, Nv, and Nw, and leg circuits 4u, 4v, and 4w may be AC-connected to interconnection transformer 13 or the interconnection reactor via secondary windings magnetically coupled to the primary windings. In this case, the primary windings may be reactors 8A and 8B described below. That is, leg circuits 4 are electrically (that is, DC- or AC-) connected with AC circuit 12 via connection portions provided to leg circuits 4u, 4v, 4w, such as AC input terminals Nu, Nv, Nw or the primary windings described above.

Leg circuit 4u includes an upper arm 5 extending from high potential-side DC terminal Np to AC input terminal Nu, and a lower arm 6 extending from low potential-side DC terminal Nn to AC input terminal Nu. AC input terminal Nu, which is a connection point between upper arm 5 and lower arm 6, is connected with interconnection transformer 13. High potential-side DC terminal Np and low potential-side DC terminal Nn are connected to DC circuit 14. Since leg circuits 4v and 4w also have the same configuration, leg circuit 4u will be described below as a representative.

Upper arm 5 includes a plurality of cascade-connected converter cells 7, and reactor 8A. The plurality of converter cells 7 and reactor 8A are connected in series with each other. Lower arm 6 includes a plurality of cascade-connected converter cells 7, and reactor 8B. The plurality of converter cells 7 and reactor 8B are connected in series with each other.

Reactor 8A may be inserted at any position in upper arm 5 of leg circuit 4u, and reactor 8B may be inserted at any position in lower arm 6 of leg circuit 4u. A plurality of reactors 8A and a plurality of reactors 8B may be provided. The reactors may have inductance values different from each other. Furthermore, only reactor 8A in upper arm 5 or only reactor 8B in lower arm 6 may be provided.

Power conversion device 1 includes an AC voltage detector 10, an AC current detector 16, DC voltage detectors 11A and 11B, and arm current detectors 9A and 9B provided to each leg circuit 4. These detectors each measure an electrical quantity (that is, a current or a voltage) used to control power conversion device 1. Detection signals detected by these detectors are inputted to control device 3.

Control device 3 outputs an operation command for controlling an operation state of each converter cell based on these detection signals. Control device 3 receives, from each converter cell, a signal indicating a detection value of a voltage of a capacitor provided to the converter cell.

Control device 3 may be constituted by a dedicated circuit, or may be partially or entirely constituted by a field programmable gate array (FPGA), an application specific integrated circuit (ASIC), a microprocessor, or the like. It should be noted that control device 3 may be constituted by a digital protection relay device, for example.

AC voltage detector 10 detects a U-phase AC voltage Vacu, a V-phase AC voltage Vacv, and a W-phase AC voltage Vacw of AC circuit 12. AC current detector 16 detects a U-phase AC current Iacu, a V-phase AC current Iacv, and a W-phase AC current Iacw (hereinafter also collectively referred to as an "AC current Iac") of AC circuit 12. DC voltage detector 11A detects a DC voltage value Vdcp of high potential-side DC terminal Np connected to DC circuit 14. DC voltage detector 11B detects a DC voltage value Vdcn of low potential-side DC terminal Nn connected to DC circuit 14.

It should be noted that a DC voltage Vdc of DC circuit 14 is a DC voltage between high potential-side DC terminal Np and low potential-side DC terminal Nn, and is obtained from DC voltage values Vdcp and Vdcn detected by DC voltage detectors 11A and 11B. Specifically, DC voltage Vdc is obtained as "Vdc = Vdcp-Vdcn".

Arm current detectors 9A and 9B provided to leg circuit 4u for the U phase detect an arm current Ipu flowing to upper arm 5 and an arm current Inu flowing to lower arm 6, respectively. Arm current detectors 9A and 9B provided to leg circuit 4v for the V phase detect an arm current Ipv and an arm current Inv, respectively. Arm current detectors 9A and 9B provided to leg circuit 4w for the W phase detect an arm current Ipw and an arm current Inw, respectively.

A DC current Idc outputted from power converter 2 is detected using a DC current detector (not shown). It should be noted that DC current Idc may be computed using arm currents Ipu to Inw.

### < Configuration of Converter Cell>

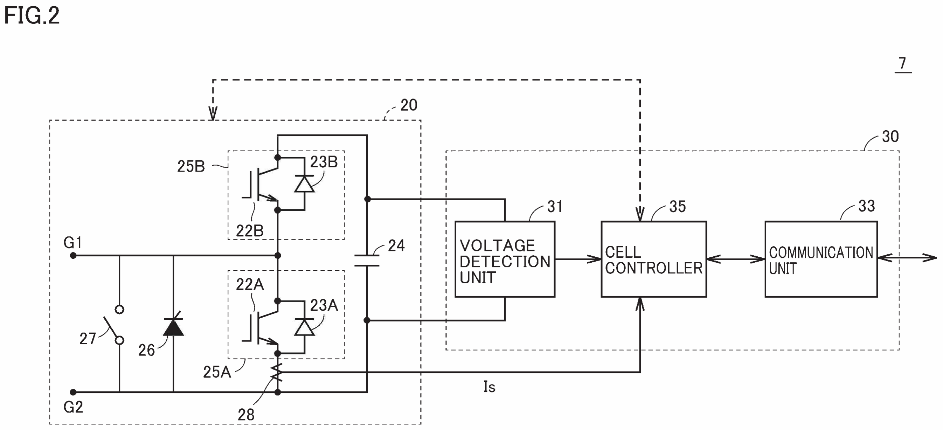

Fig. 2 is a diagram showing a configuration of the converter cell according to the present embodiment. Referring to Fig. 2, a half-bridge type switching circuit 20 and a control circuit 30 are included.

Half-bridge type switching circuit 20 includes a capacitor 24, semiconductor circuits 25A and 25B, a thyristor 26, and a bypass switch 27.

Semiconductor circuit 25A includes a switching element 22A and a diode 23A. Diode 23A is a freewheel diode (hereinafter also referred to as an "FWD") connected in anti-parallel (that is, in parallel and in a reverse bias direction) with switching element 22A. Semiconductor circuit 25B includes a switching element 22B and a diode 23B. Diode 23B is an FWD connected in anti-parallel with switching element 22B.

Switching elements 22A and 22B are each constituted, for example, by a self-turn-off semiconductor switching element such as an insulated gate bipolar transistor (IGBT) or a metal oxide semiconductor field-effect transistor (MOSFET).

Capacitor 24 as a power storage element is connected in parallel with a series body including semiconductor circuit 25A and semiconductor circuit 25B connected in series, and holds a DC voltage. A connection node between switching element 22A and switching element 22B is connected with an input/output terminal G1 on a high potential side. A connection node between switching element 22B and capacitor 24 is connected with an input/output terminal G2 on a low potential side. Further, a positive electrode of capacitor 24 is connected with a positive electrode of semiconductor circuit 25B, and a negative electrode of capacitor 24 is connected with a negative electrode of semiconductor circuit 25A.

Thyristor 26 is connected in parallel with semiconductor circuit 25A. Thyristor 26 is a switching element in which conduction is established between an anode and a cathode (that is, thyristor 26 is turned on) when a gate current flows therethrough, and when thyristor 26 is in an ON state, it causes a current to flow only in one direction. Once turned on, thyristor 26 remains in the ON state until a current between the anode and the cathode becomes zero, even when the gate current becomes 0.

Bypass switch 27 is connected between input/output terminals G1 and G2. In the example in Fig. 2, bypass switch 27 is connected in parallel with semiconductor circuit 25A. By turning on bypass switch 27, converter cell 7 is short-circuited. Bypass switch 27 is also utilized to short-circuit converter cell 7 when each element (for example, semiconductor circuit 25A, 25B or the like) of converter cell 7 fails. Thereby, even when any converter cell 7 among the plurality of converter cells 7 fails, operation of power converter 2 can be continued by utilizing other converter cells 7.

A current detector 28 is provided between semiconductor circuit 25A and input/output terminal G2 to detect a current Is flowing to semiconductor circuit 25A. Current detector 28 is constituted, for example, by a shunt resistor or the like. Detected current Is is inputted to control circuit 30.

Although the example in Fig. 2 describes a configuration in which input/output terminal G1 on the high potential side is connected to the connection node between switching elements 22A and 22B, and input/output terminal G2 on the low potential side is connected to the connection node between switching element 22A and capacitor 24, the present disclosure is not limited to such a configuration. For example, input/output terminal G1 may be connected to the connection node between switching element 22B and capacitor 24, and input/output terminal G2 may be connected to the connection node between switching elements 22A and 22B. In this case, thyristor 26 and bypass switch 27 are connected in parallel with semiconductor circuit 25B. Current detector 28 is provided between semiconductor circuit 25B and input/output terminal G2 to detect current Is flowing to semiconductor circuit 25B.

Control circuit 30 includes a voltage detection unit 31, a cell controller 35, and a communication unit 33. Each of these functions is constituted, for example, by an ASIC, an FPGA, a combination thereof, or the like.

Voltage detection unit 31 detects a voltage across capacitor 24 (hereinafter also referred to as a "capacitor voltage"). The detected capacitor voltage is inputted to cell controller 35. Communication unit 33 transmits and receives various kinds of information to and from control device 3.

Cell controller 35 controls operation of switching circuit 20. In an aspect, cell controller 35 performs control in accordance with the operation command received from control device 3 via communication unit 33. During a normal operation (for example, in the case of outputting a zero voltage or a positive voltage to between input/output terminals G1 and G2), cell controller 35 performs control to set one of switching elements 22A and 22B to an ON state and set the other thereof to an OFF state. When switching element 22A is in the OFF state and switching element 22B is in the ON state, the voltage across capacitor 24 is applied between input/output terminals G1 and G2. On the other hand, when switching element 22A is in the ON state and switching element 22B is in the OFF state, the voltage between input/output terminals G1 and G2 becomes 0 V.

Converter cell 7 can output the zero voltage or the positive voltage dependent on the voltage of capacitor 24, by alternately setting switching elements 22A and 22B to the ON state. Diodes 23A and 23B are provided for protection when a reverse voltage is applied to switching elements 22A and 22B, respectively.

In another aspect, cell controller 35 detects an overcurrent based on current Is received from current detector 28. Typically, when current Is is more than or equal to a threshold value K1, cell controller 35 detects an overcurrent flowing to semiconductor circuit 25A. When cell controller 35 detects the overcurrent, cell controller 35 gate-blocks switching elements 22A and 22B (for example, fixes switching elements 22A and 22B to the OFF state), and controls thyristor 26 to be in the ON state.

For example, when a short-circuit fault in DC circuit 14 occurs, a short-circuit current flows through a path that passes through input/output terminal G2, diode 23A, and input/output terminal G1 in this order. In this case, cell controller 35 detects an overcurrent flowing to diode 23A, gate-blocks switching elements 22A and 22B, and controls thyristor 26 to be in the ON state. Thereby, the short-circuit current also flows through a path that passes through input/output terminal G2, thyristor 26, and input/output terminal G1 in this order, and thus the current flowing to diode 23A decreases. Accordingly, diode 23A can be prevented from being broken.

Cell controller 35 notifies control device 3 that cell controller 35 has detected the overcurrent, via communication unit 33. When control device 3 receives a notification of detection of the overcurrent, control device 3 instructs (for example, transmits instruction information to) each of all converter cells 7 included in power converter 2 to gate-block switching elements 22A and 22B of converter cell 7 and control thyristor 26 of converter cell 7 to be in the ON state. In accordance with the instruction, cell controller 35 of each converter cell 7 gate-blocks switching elements 22A and 22B and sets thyristor 26 to the ON state. Thereby, the elements of each converter cell 7 included in power converter 2 can be protected more appropriately.

It should be noted that controlling thyristor 26 to be in the ON state is performed as follows, for example. Cell controller 35 outputs a trigger signal for setting thyristor 26 to the ON state, to a trigger circuit (not shown). Upon receiving an input of the trigger signal, the trigger circuit provides a gate pulse to thyristor 26. Thereby, thyristor 26 is set to the ON state (that is, a conduction state).

Cell controller 35 receives a state signal indicating the state of thyristor 26, from the trigger circuit, and stores the state signal in an internal memory of control circuit 30. Specifically, cell controller 35 stores the trigger signal (or the gate pulse) associated with the state signal of thyristor 26, in the internal memory. Thereby, a system operator can check data stored in the internal memory when performing a periodic inspection of converter cell 7 using an inspection terminal, and thus the system operator can perform a detailed inspection.

Cell controller 35 may transmit data including the trigger signal (or the gate pulse) associated with the state signal of thyristor 26, to control device 3. Thereby, control device 3 can check operation of thyristor 26 of converter cell 7.

Further, when current Is flowing to semiconductor circuit 25A is less than threshold value K1 but is more than or equal to a relatively high threshold value K2 (where K1>K2), cell controller 35 may notify control device 3 of an abnormality of converter cell 7, via communication unit 33. Thereby, control device 3 can check the abnormality of converter cell 7.

It should be noted that, when cell controller 35 detects the abnormality of converter cell 7 and the overcurrent described above, cell controller 35 may turn on a warning lamp provided to converter cell 7. For example, a configuration in which the warning lamp is monitored using a monitoring camera or the like may be adopted. In this case, the monitoring camera may transmit a captured monitoring image to control device 3.

In still another aspect, cell controller 35 performs processing in accordance with an instruction from control device 3 received via communication unit 33. Typically, when control device 3 detects a short-circuit fault in DC circuit 14, control device 3 instructs each of all converter cells 7 included in power converter 2 to gate-block switching elements 22A and 22B of converter cell 7 and control thyristor 26 of converter cell 7 to be in the ON state. In accordance with the instruction, cell controller 35 of each converter cell 7 gate-blocks switching elements 22A and 22B and sets thyristor 26 to the ON state.

For example, when detected DC current Idc is more than or equal to a specified current threshold value, control device 3 detects a short-circuit fault in DC circuit 14. It should be noted that control device 3 may detect the short-circuit fault using DC voltage Vdc, AC current Iac, arm currents Ipu to Inw, and the like.

Cell controller 35 may have a self-diagnosis function of diagnosing a failure of converter cell 7. For example, the failure of converter cell 7 includes a failure of a switching element, a failure of a gate driver, a failure of a capacitor, a communication abnormality, and the like. When cell controller 35 detects a failure of converter cell 7, cell controller 35 turns on bypass switch 27 (that is, closes bypass switch 27). Cell controller 35 transmits failure information indicating the failure to control device 3.

With the above configuration, not only when a short-circuit fault in DC circuit 14 occurs, but also when there occurs a phenomenon in which an overcurrent flows to some converter cells 7 due to a partial short circuit, a ground fault, or the like within an arm, cell controller 35 of such converter cell 7 detects the overcurrent, gate-blocks switching elements 22A and 22B, and controls thyristor 26 to be in the ON state. Thereby, the elements (for example, the FWD and the switching element) of converter cell 7 can be protected from the overcurrent due to a fault other than a short-circuit fault in DC circuit 14. Further, since converter cell 7 itself detects an overcurrent, immediately gate-blocks switching elements 22A and 22B, and controls thyristor 26 to be in the ON state, the elements of converter cell 7 can be protected more quickly.

Furthermore, when control device 3 receives a notification of detection of an overcurrent generated in one or more converter cells 7, control device 3 provides an instruction to gate-block switching elements 22A and 22B included in power converter 2 and control thyristor 26 to be in the ON state. Thereby, the elements of each converter cell 7 included in power converter 2 can be prevented from being broken.

### <Hardware Configuration of Control Device>

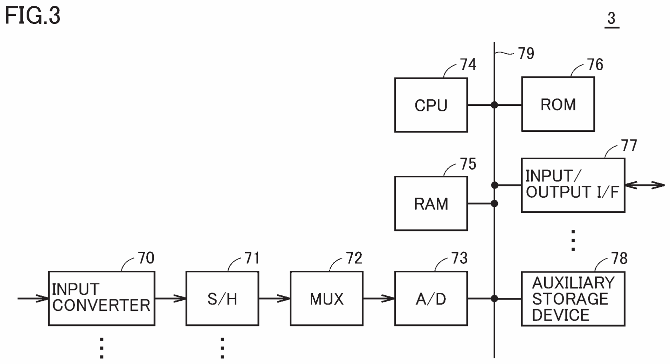

Fig. 3 is a block diagram showing an example of a hardware configuration of the control device according to the present embodiment. Control device 3 in the case of Fig. 3 is constituted based on a computer. Referring to Fig. 3, control device 3 includes one or more input converters 70, one or more sample hold (S/H) circuits 71, a multiplexer (MUX) 72, and an A/D converter 73. Furthermore, control device 3 includes one or more central processing unit (CPU) 74, a random access memory (RAM) 75, and a read only memory (ROM) 76. Furthermore, control device 3 includes one or more input/output interfaces 77, an auxiliary storage device 78, and a bus 79 that mutually connects the components described above.

Input converter 70 includes an auxiliary transformer for each input channel. Each auxiliary transformer converts a detection signal detected by each of the detectors for various electrical quantities shown in Fig. 1 into a signal having a voltage level suitable for subsequent signal processing.

Sample hold circuit 71 is provided for each input converter 70. Sample hold circuit 71 samples a signal indicating an electrical quantity received from corresponding input converter 70 using a specified sampling frequency, and holds the signal.

Multiplexer 72 sequentially selects the signals held in a plurality of sample hold circuits 71. A/D converter 73 converts a signal selected by multiplexer 72 into a digital value. It should be noted that A/D conversion may be performed in parallel on detection signals of a plurality of input channels, by providing a plurality of A/D converters 73.

CPU 74 controls entire control device 3, and performs computation processing in accordance with a program. RAM 75 as a volatile memory and ROM 76 as a nonvolatile memory are used as main storages for CPU 74. ROM 76 stores programs, set values for signal processing, and the like. Auxiliary storage device 78 is a nonvolatile memory having a capacity larger than that of ROM 76, and stores programs, data of electrical quantity detection values, and the like.

Input/output interface 77 is an interface circuit in communicating between CPU 74 and an external device.

It should be noted that at least a part of control device 3 may be constituted using a circuit such as an FPGA and an ASIC. Alternatively, at least a part of control device 3 can also be constituted by an analog circuit.

### <Application of Limiting Circuit>

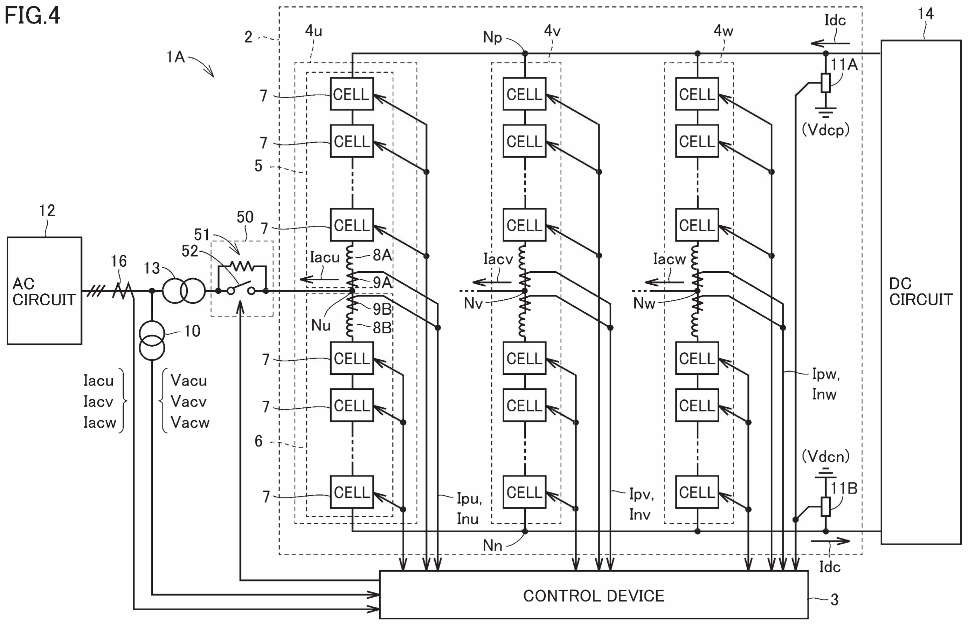

Fig. 4 is a schematic configuration diagram showing a first modification of the power conversion device according to the present embodiment. Referring to Fig. 4, a power conversion device 1A includes power converter 2, control device 3, and a limiting circuit 50. That is, power conversion device 1A has a configuration obtained by adding limiting circuit 50 to power conversion device 1 in Fig. 1. Here, components of power conversion device 1A that are different from those of power conversion device 1 will be described.

Limiting circuit 50 limits a current flowing between AC circuit 12 and power converter 2. Limiting circuit 50 includes a charging resistor 51, and a switch 52 connected in parallel with charging resistor 51.

Control device 3 controls an opening/closing operation of switch 52 by transmitting a control signal to switch 52.

When power conversion device 1 is activated, initial charging of each capacitor 24 is performed. Typically, when a circuit breaker (not shown) for system interconnection is turned on, power (current) is supplied from AC circuit 12 to power converter 2. When power conversion device 1 is normally activated (for example, when a DC short-circuit fault does not occur), an inrush current flows to capacitor 24, which may cause an overcurrent stress on the elements of converter cell 7 and an instantaneous voltage drop on a system side. Further, when a short-circuit fault in DC circuit 14 has already occurred at the stage of activating power conversion device 1, a very large short-circuit current flows into power converter 2, but it is not possible to turn on thyristor 26 because activation of cell controller 35 has not been completed. Accordingly, the elements of converter cell 7 may be broken.

Thus, control device 3 opens switch 52 before the initial charging of each capacitor 24 is started. In this case, a charging current flows from AC circuit 12 via charging resistor 51 of limiting circuit 50, and the initial charging of capacitor 24 of each converter cell 7 is started. Accordingly, it is possible to suppress a current flowing into power converter 2 during the initial charging of capacitor 24. Furthermore, charging resistor 51 has a resistance value capable of suppressing the current to such an extent that the elements (for example, the FWD) of each converter cell 7 can be prevented from being broken even when a short-circuit fault in DC circuit 14 occurs. That is, charging resistor 51 has a function of suppressing the current flowing from AC circuit 12 into power converter 2 in the event of a short-circuit fault in DC circuit 14. Thereby, the elements of converter cell 7 can be prevented from being broken even in the event of a DC short-circuit fault during activation.

Thereafter, when the initial charging of each capacitor 24 is completed (for example, when the capacitor voltage rises to a specified voltage), control device 3 closes switch 52.

With the above configuration, capacitor 24 of each converter cell 7 and DC circuit 14 can be appropriately charged when power converter 2 is activated.

### <Modification of Switching Circuit>

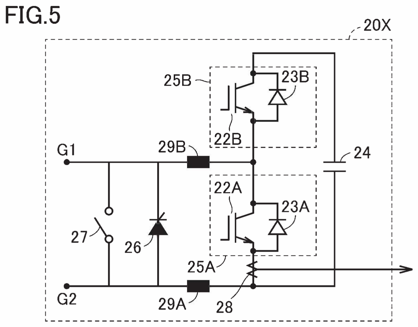

Fig. 5 is a diagram showing a modification of the switching circuit according to the present embodiment. Referring to Fig. 5, a switching circuit 20X of converter cell 7 is obtained by adding reactance elements 29A and 29B to switching circuit 20 in Fig. 2. For components of switching circuit 20X that are the same as those of switching circuit 20, the detailed description thereof will not be repeated.

When an overcurrent is detected by cell controller 35 in the event of a short-circuit fault in DC circuit 14, thyristor 26 is set to the ON state. In this case, a short-circuit current flows through a first path that passes through input/output terminal G2, thyristor 26, and input/output terminal G1 in this order, and a second path that passes through input/output terminal G2, diode 23A, and input/output terminal G1 in this order. Since the short-circuit current includes an AC component, current division ratios of the first path and the second path are determined according to a resistance component and a reactance component. Specifically, the current division ratio of a path having a small reactance component is higher than the current division ratio of a path having a large reactance component.

In switching circuit 20X, a reactance of the first path passing through thyristor 26 is configured to be smaller than a reactance of the second path passing through diode 23A. Thereby, the current division ratio of the first path is higher than the current division ratio of the second path, and a current flowing to thyristor 26 can become larger than a current flowing to diode 23A. Therefore, diode 23A can be prevented from being broken.

In the example in Fig. 5, reactance elements (for example, coils) 29A and 29B are provided between semiconductor circuit 25A and thyristor 26. Specifically, reactance element 29A is provided on a connection node between the negative electrode of semiconductor circuit 25A and a negative electrode of thyristor 26. Reactance element 29B is provided on a connection node between a positive electrode of semiconductor circuit 25A and a positive electrode of thyristor 26. It should be noted that, instead of reactance elements 29A and 29B, a component that increases a reactance (for example, disposing a conductor that reduces cancellation of magnetic flux of a reciprocating current) may be adopted.

It should be noted that, in order to suppress a switching surge, a reactance of a connection node between diode 23A and capacitor 24 and a reactance of a connection node between semiconductor circuit 25B and capacitor 24 are preferably as small as possible.

### <Control of Temperature of Cooling Water>

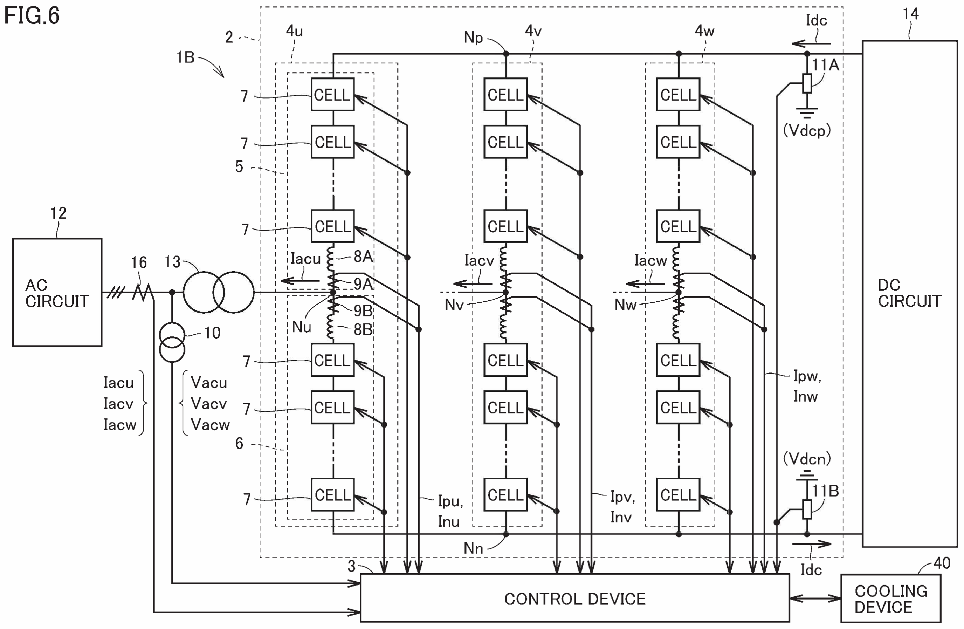

Fig. 6 is a schematic configuration diagram showing a second modification of the power conversion device according to the present embodiment. Referring to Fig. 6, a power conversion device 1B includes power converter 2, control device 3, and a cooling device 40. That is, power conversion device 1B has a configuration obtained by adding cooling device 40 to power conversion device 1 in Fig. 1. Here, components of power conversion device 1B that are different from those of power conversion device 1 will be described.

Cooling device 40 supplies cooling water for cooling semiconductor circuits 25A and 25B (specifically, switching elements 22A and 22B and diodes 23A and 23B) of each converter cell 7 included in power converter 2. For example, a part of a pipe of cooling device 40 is provided to be thermally coupled to semiconductor circuits 25A and 25B within power converter 2. The cooling water flowing through the pipe cools semiconductor circuits 25A and 25B thermally coupled to the pipe.

Although semiconductor circuits 25A and 25B are thus cooled by the cooling water, thyristor 26 is at room temperature (that is, thyristor 26 is not cooled by the cooling water). Accordingly, for example, when the cooling water has a temperature lower than that at a normal time, such as at a cold time, semiconductor circuits 25A and 25B are cooled more than expected. Since the current flows more easily as semiconductor circuits 25A and 25B are cooled more, the current division ratio of the first path passing through thyristor 26 and the current division ratio of the second path passing through semiconductor circuit 25A change at the cold time, when compared with those at the normal time. Specifically, at the cold time, the current division ratio of the first path passing through thyristor 26 is lower than that at the normal time, and the current division ratio of the second path passing through semiconductor circuit 25A is higher than that at the normal time.

Therefore, before power converter 2 is activated, cooling device 40 controls the temperature of the cooling water to be equal to or higher than a specified temperature. For example, cooling device 40 raises the temperature of the cooling water by heating with a heater, self-heating by a circulating operation, or the like. When the temperature of the cooling water reaches the specified temperature or higher, cooling device 40 notifies control device 3 accordingly. After receiving the notification, control device 3 performs processing of activating power converter 2.

With the above configuration, the current division ratios of the first path and the second path can be kept constant, and thus diode 23A can be prevented from being broken due to a current more than expected flowing to diode 23A in the event of a short-circuit fault or the like.

### <Modification of Converter Cell>

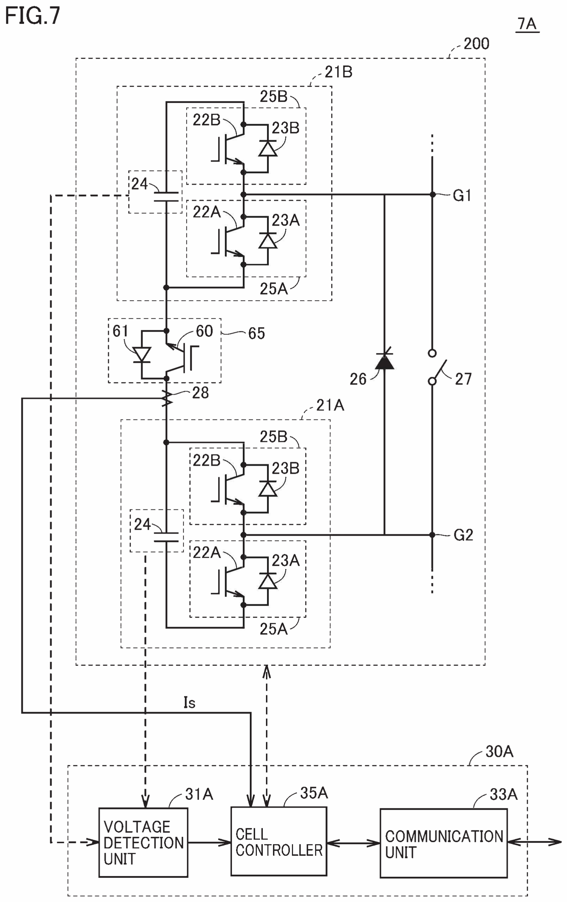

Fig. 7 is a diagram showing a modification of the converter cell according to the present embodiment. Referring to Fig. 7, a converter cell 7A includes a control circuit 30A and a cell circuit 200. Cell circuit 200 includes switching circuits 21A and 21B, thyristor 26, bypass switch 27, and a semiconductor circuit 65.

Each of switching circuit 21A and switching circuit 21B includes semiconductor circuits 25A and 25B and capacitor 24. The configuration of semiconductor circuits 25A and 25B is the same as the configuration in Fig. 2. The positive electrode of capacitor 24 is connected with the positive electrode of semiconductor circuit 25B, and the negative electrode of capacitor 24 is connected with the negative electrode of semiconductor circuit 25A.

A connection node between switching element 22A and switching element 22B included in switching circuit 21A is connected with input/output terminal G2 on the low potential side. A connection node between switching element 22A and switching element 22B included in switching circuit 21B is connected with input/output terminal G1 on the high potential side.

Semiconductor circuit 65 is provided between the positive electrode of capacitor 24 in switching circuit 21A and the negative electrode of capacitor 24 in switching circuit 21B. Semiconductor circuit 65 includes a switching element 60 and a diode 61. Diode 61 is an FWD connected in anti-parallel with switching element 60. Switching element 60 controls a conduction state in a current direction passing through diode 23B of switching circuit 21A and diode 23A of switching circuit 21B. As with switching elements 22A and 22B, switching element 60 is constituted by a self-turn-off semiconductor switching element such as an IGBT or a MOSFET.

Thyristor 26 is connected between the positive electrode of semiconductor circuit 25A in switching circuit 21A and the positive electrode of semiconductor circuit 25A in switching circuit 21B. Bypass switch 27 is connected in parallel with thyristor 26.

Current detector 28 detects current Is flowing to switching element 60. For example, current detector 28 is provided between a negative electrode of switching element 60 and the positive electrode of semiconductor circuit 25B in switching circuit 21A. It should be noted that current detector 28 may be provided between a positive electrode of switching element 60 and the negative electrode of semiconductor circuit 25A in switching circuit 21B.

Control circuit 30A includes a voltage detection unit 31A, a communication unit 33A, and a cell controller 35A. Voltage detection unit 31A detects the voltage across capacitor 24 (that is, the capacitor voltage) in each of switching circuits 21A and 21B. The detected capacitor voltage is inputted to cell controller 35A. Communication unit 33A transmits and receives various kinds of information to and from control device 3.

Cell controller 35A controls operation of cell circuit 200. In an aspect, during a normal operation, cell controller 35A controls switching element 60 to be in the ON state, controls switching elements 22A and 22B of switching circuits 21A and 21B to be in the ON state or the OFF state, and outputs a zero voltage or a positive voltage to between input/output terminals G1 and G2.

In another aspect, when current Is is more than or equal to threshold value K1, cell controller 35A detects an overcurrent flowing to switching element 60. When cell controller 35A detects the overcurrent, cell controller 35A gate-blocks switching element 60 and all switching elements 22A and 22B included in each of switching circuits 21A and 21B, and controls thyristor 26 to be in the ON state.

For example, when a short-circuit fault in DC circuit 14 occurs, a short-circuit current flows through a path that passes through input/output terminal G2, diode 23B of switching circuit 21A, switching element 60, diode 23A of switching circuit 21B, and input/output terminal G1 in this order. Cell controller 35A detects an overcurrent, gate-blocks switching element 60 and switching elements 22A and 22B included in switching circuits 21A and 21B, and controls thyristor 26 to be in the ON state.

In this case, since switching element 60 is in a gate-blocked state, switching circuits 21A and 21B are electrically disconnected. Therefore, the short-circuit current flows through a path that passes through input/output terminal G2, thyristor 26, and input/output terminal G1 in this order. In this case, the short-circuit current is commutated to thyristor 26, instead of being divided between thyristor 26 and the diodes of switching circuits 21A and 21B. Thereby, the elements of converter cell 7A (for example, diode 23B of switching circuit 21A and diode 23A of switching circuit 21B) can be more effectively prevented from being broken. It should be noted that, in an exemplary configuration in which switching circuit 21A and switching circuit 21B are directly connected without providing semiconductor circuit 65, the short-circuit current is divided between thyristor 26 and the diodes. Even in this exemplary configuration, the diodes can be protected.

Cell controller 35A notifies control device 3 that cell controller 35A has detected the overcurrent, via communication unit 33A. When control device 3 receives a notification of detection of the overcurrent, control device 3 instructs each of all converter cells 7A included in power converter 2 to gate-block switching elements 22A and 22B and control thyristor 26 to be in the ON state.

With the above configuration, not only when a short-circuit fault in DC circuit 14 occurs, but also when there occurs a phenomenon in which an overcurrent flows to some converter cells 7A due to a partial short circuit, a ground fault, or the like within an arm, the elements (for example, the FWD and the switching element) of converter cell 7A can be protected from the overcurrent. Further, the elements of converter cell 7A can be protected more quickly. It should be noted that, with the configuration of converter cell 7A, since switching element 60 is in the gate-blocked state when the overcurrent occurs, a fault current can be prevented from flowing into switching circuits 21A and 21B.

### Other Embodiments

The embodiment described above has described, in Fig. 2, the configuration in which current detector 28 is provided between semiconductor circuit 25A and input/output terminal G2. As another example, current detector 28 may be further provided between semiconductor circuit 25B and input/output terminal G1. In this case, cell controller 35 can detect a current flowing to semiconductor circuit 25B (for example, a discharging current discharged from capacitor 24). For example, when the current is more than or equal to a threshold value Ka, cell controller 35 detects an overcurrent flowing to semiconductor circuit 25B. When cell controller 35 detects the overcurrent, cell controller 35 may gate-block switching elements 22A and 22B, and control thyristor 26 to be in the ON state.

The configuration exemplified as each of the embodiments described above is an exemplary configuration of the present disclosure, and can be combined with another known technique, or can be configured as being modified, for example, partially omitted, without departing from the gist of the present disclosure. Further, in each of the embodiments described above, the processing and the configuration described in another embodiment may be adopted and performed as appropriate.

It should be understood that the embodiments disclosed herein are illustrative and non-restrictive in every respect. The scope of the present disclosure is defined by the scope of the claims, rather than the description above, and is intended to include any modifications within the scope and meaning equivalent to the scope of the claims.

### REFERENCE SIGNS LIST

1, 1A, 1B: power conversion device; 2: power converter; 3: control device; 4u, 4v, 4w: leg circuit; 5: upper arm; 6: lower arm; 7, 7a: converter cell; 8A, 8B: reactor; 9A, 9B: arm current detector; 10: AC voltage detector; 11A, 11B: DC voltage detector; 12: AC circuit; 13: interconnection transformer; 14: DC circuit; 16: AC current detector; 20, 20X, 21A, 21B: switching circuit; 22A, 22B, 60: switching element; 23A, 23B: diode; 24: capacitor; 25A, 25B: semiconductor circuit; 26: thyristor; 27: bypass switch; 28: current detector; 29A, 29B: reactance element; 30, 30A: control circuit; 31, 31A: voltage detection unit; 33, 33A: communication unit; 35, 35A: cell controller; 40: cooling device; 50: limiting circuit; 51: charging resistor; 52: switch; 70: input converter; 71: sample hold circuit; 72: multiplexer; 73: A/D converter; 74: CPU; 75: RAM; 76: ROM; 77: input/output interface; 78: auxiliary storage device; 79: bus; 200: cell circuit.

## Claims

1. A power conversion device to perform power conversion between an AC circuit and a DC circuit, the power conversion device comprising:
a power converter including a plurality of converter cells connected in series; and
a control device to control the power converter, wherein
each of the plurality of converter cells includes
a cell controller,
a first semiconductor circuit including a first switching element and a first diode connected in anti-parallel with the first switching element,
a second semiconductor circuit including a second switching element and a second diode connected in anti-parallel with the second switching element,
a power storage element connected in parallel with a series body including the first semiconductor circuit and the second semiconductor circuit connected in series, and
a thyristor connected in parallel with the first semiconductor circuit, and
when the cell controller detects an overcurrent flowing to the first semiconductor circuit, the cell controller gate-blocks the first switching element and the second switching element, and controls the thyristor to be in an ON state.

2. The power conversion device according to claim 1, wherein
the cell controller notifies the control device that the cell controller has detected the overcurrent, and
when the control device receives a notification of detection of the overcurrent, the control device instructs each of the plurality of converter cells to gate-block the first switching element and the second switching element of the converter cell and control the thyristor of the converter cell to be in the ON state.

3. The power conversion device according to claim 1 or claim 2, wherein, when the control device detects a short-circuit fault in the DC circuit, the control device instructs each of the plurality of converter cells to gate-block the first switching element and the second switching element of the converter cell and control the thyristor of the converter cell to be in the ON state.

4. The power conversion device according to claim 3, wherein, in an event of the short-circuit fault in the DC circuit, a reactance of a current path passing through the thyristor is configured to be smaller than a reactance of a current path passing through the first diode.

5. The power conversion device according to claim 4, wherein each of the plurality of converter cells further includes a reactance element provided between the first semiconductor circuit and the thyristor.

6. The power conversion device according to any one of claims 1 to 5, further comprising a limiting circuit to limit a current flowing between the AC circuit and the power converter, wherein
the limiting circuit includes a charging resistor for suppressing a current flowing from the AC circuit into the power converter in an event of a short-circuit fault in the DC circuit, and a switch connected in parallel with the charging resistor, and
the control device opens the switch before initial charging of the power storage element included in each of the plurality of converter cells is started.

7. The power conversion device according to any one of claims 1 to 6, further comprising a cooling device to supply cooling water for cooling the first semiconductor circuit and the second semiconductor circuit of the converter cell, wherein
the cooling device controls a temperature of the cooling water to be equal to or higher than a specified temperature, and
when the temperature of the cooling water reaches the specified temperature or higher, the control device activates the power converter.

8. The power conversion device according to any one of claims 1 to 7, wherein
the cell controller
outputs a trigger signal for setting the thyristor to the ON state, to a trigger circuit,
receives a state signal indicating a state of the thyristor, from the trigger circuit, and
stores the state signal.

9. A power conversion device to perform power conversion between an AC circuit and a DC circuit, the power conversion device comprising:
a power converter including a plurality of converter cells connected in series; and
a control device to control the power converter, wherein
each of the plurality of converter cells includes
a cell controller, and
a first switching circuit and a second switching circuit,
each of the first switching circuit and the second switching circuit has
a first semiconductor circuit including a first switching element and a first diode connected in anti-parallel with the first switching element,
a second semiconductor circuit including a second switching element and a second diode connected in anti-parallel with the second switching element, and
a power storage element connected in parallel with a series body including the first semiconductor circuit and the second semiconductor circuit connected in series,
a positive electrode of the power storage element is connected with a positive electrode of the second semiconductor circuit, and a negative electrode of the power storage element is connected with a negative electrode of the first semiconductor circuit,
each of the plurality of converter cells further includes
a third switching element provided between the positive electrode of the power storage element in the first switching circuit and the negative electrode of the power storage element in the second switching circuit, and
a thyristor connected between a positive electrode of the first semiconductor circuit in the first switching circuit and a positive electrode of the first semiconductor circuit in the second switching circuit, and
when the cell controller detects an overcurrent flowing to the third switching element, the cell controller gate-blocks the first switching element, the second switching element, and the third switching element, and controls the thyristor to be in an ON state.
